# EUROPEAN PATENT APPLICATION

(11) **EP 4 597 996 A1**
(43) Date of publication of application: **06.08.2025**
(21) Application number: 23894868.1
(22) Date of filing: 02.11.2023
(51) Int. Cl.: H04M 1/04, H04M 1/02, G06F 1/16

(54) **HOLDING ACCESSORY FOR ELECTRONIC DEVICE**

(30) Priority: 23.11.2022 KR 20220158563; 30.11.2022 KR 20220164352
(71) Applicant: Samsung Electronics Co., Ltd., Suwon-si, Gyeonggi-do 16677 (KR)
(72) Inventor: JEONG, Jaeyoung, Suwon-si, Gyeonggi-do 16677 (KR); KIM, Namkyu, Suwon-si, Gyeonggi-do 16677 (KR); YI, Byeongwoo, Suwon-si, Gyeonggi-do 16677 (KR)
(74) Representative: Nederlandsch Octrooibureau
(86) International application number: PCT/KR2023/017391
(87) International publication number: WO 2024/111939

(57) **Abstract**

A holding accessory, according to various embodiments, may comprise: a protective cover which is removably coupled to an electronic device so as to cover at least a portion of the electronic device, the protective cover including a module mounting part comprising at least one protruding rib; a mount module which is mounted on the module mounting part and which comprises a first surface and a second surface facing in an opposite direction to the first surface, the mount module including: a holder mount comprising a holder part disposed on the first surface and having at least one guide groove formed therein to receive the at least one protruding rib; a cover disposed on the second surface; and a holding structure movably disposed on the cover and/or the holder mount; and a locker member which is slidably disposed between the holder mount and the cover and which maintains the coupled state of the mount module, wherein when the holder mount is mounted and then rotated at a predetermined angle, the mount module may be coupled to the protective cover in such a way that the at least one protruding rib is seated in the at least one guide groove.

## Description

### [Technical Field]

Various embodiments of the disclosure relate to a holding accessory for an electronic device.

### [Background Art]

Portable electronic devices are commonly used in daily life, and various accessories related to portable electronic devices are being released. Among these accessories, a holding accessory that may hold a portable electronic device may be detachably coupled to a portable electronic device, and provide a structure held on various structures or a human body, thereby improving convenience of use.

### [Disclosure of Invention]

### [Technical Problem]

A holding accessory for a portable electronic device may include a protective cover and a mount module detachably coupled to the protective cover. The protective cover may be detachably mounted in a manner that covers at least a portion of the portable electronic device. The mount module may include a holder part including protrusions that may be fastened to a module mounting part disposed in the protective cover through at least one groove. For example, the mount module may be fastened in a manner that the mount module is rotated after being inserted into the holder part. The mount module may include a holding structure, and hold the electronic device on a holding surface (e.g., desk) or on a human body through the holding structure, thereby providing convenience of use.

However, these holding accessories may cause inconvenience in use as the mount module may be rotated arbitrarily during use. Further, as the mount module may be arbitrarily separated from the protective cover during use, the mount module may be damaged due to accidents such as dropping of the electronic device.

Various embodiments of the disclosure may provide a holding accessory for an electronic device that may help improve convenience of use.

Various embodiments may provide a holding accessory for an electronic device that may help improve reliability of use by continuously maintaining a coupled state after being coupled with the electronic device.

However, the problem to be solved in the disclosure is not limited to the problem described above, and may be expanded in various ways without departing from the spirit and scope of the disclosure.

### [Solution to Problem]

According to various embodiments, a holding accessory may include a protective cover detachably coupled to cover at least a portion of an electronic device and including a module mounting part including at least one protruding rib; and a mount module mounted on the module mounting part, wherein the mount module may include a holder mount including a first surface and a second surface facing in an direction opposite to that of the first surface, and a holder part disposed at the first surface and having at least one guide groove so as to receive at least one protruding rib; a cover disposed at the second surface; a holding structure movably disposed at the cover and/or the holder mount; and a rocker member slidably disposed between the holder mount and the cover and configured to maintain a coupled state of the mount module, wherein the mount module may be coupled to the protective cover in a manner in which the at least one protruding rib is seated in the at least one guide groove in the case that the holder mount is mounted and then rotated at a designated angle.

### [Advantageous Effects of Invention]

A holding accessory according to exemplary embodiments of the disclosure can help improve reliability of use by continuously maintaining a coupled state between the holding accessory and an electronic device through a rocker member fastened only with relatively easy operations after being mounted on the electronic device.

Further, various effects directly or indirectly identified through this document can be provided.

Effects that may be obtained from the disclosure are not limited to the above-described effects, and other effects not described will be clearly understood by those of ordinary skill in the art to which the disclosure belongs from the description below.

### [Brief Description of Drawings]

In connection with the description of the drawings, the same or similar reference numerals may be used for identical or similar components.
FIG. 1A is an exploded perspective view illustrating an electronic device and a holding accessory according to various embodiments of the disclosure.
FIGS. 1B and 1C are perspective views illustrating a use state of a holding accessory coupled to an electronic device according to various embodiments of the disclosure.
FIG. 2 is a perspective view illustrating a portion of a module mounting part according to various embodiments of the disclosure.
FIG. 3 is an exploded perspective view illustrating a mount module according to various embodiments of the disclosure.
FIG. 4 is a perspective view illustrating a holder part of a holder mount according to various embodiments of the disclosure.
FIG. 5A is a partial perspective view illustrating a state in which a mount module is mounted on a protective cover according to various embodiments of the disclosure.
FIG. 5B is a cross-sectional view illustrating a mount module taken along line 5b-5b of FIG. 5A according to various embodiments of the disclosure.
FIG. 5C is a cross-sectional view illustrating a mount module taken along line 5c-5c of FIG. 5A according to various embodiments of the disclosure.
FIG. 5D is a cross-sectional view of a mount module illustrating a contact state with a hinge housing according to rotation of a ring holder according to various embodiments of the disclosure.
FIGS. 6A and 6B are diagrams illustrating a state before a mount module is rotated according to various embodiments of the disclosure.
FIGS. 7A and 7B are diagrams illustrating a state in which a mount module is rotated and then fastened through a rocker member according to various embodiments of the disclosure.
FIGS. 8A to 8C are diagrams illustrating a state in which a rocker member is released from a hook groove according to various embodiments of the disclosure.
FIGS. 9A to 9C are diagrams illustrating a state in which a rocker member is fastened to a hook groove according to various embodiments of the disclosure.
FIG. 10 is a cross-sectional view illustrating a mount module taken along line 10-10 of FIG. 5B according to various embodiments of the disclosure.
FIGS. 11A and 11B are perspective views illustrating an operation of a mount module according to various embodiments of the disclosure.
FIG. 12A is an exploded perspective view illustrating a mount module according to various embodiments of the disclosure.
FIG. 12B is a perspective view illustrating a slide cover according to various embodiments of the disclosure.
FIG. 12C is a perspective view illustrating a rocker member according to various embodiments of the disclosure.
FIG. 13 is a perspective view illustrating a coupled mount module according to various embodiments of the disclosure.
FIG. 14A is a cross-sectional view illustrating a mount module taken along line 14a-14a of FIG. 13 according to various embodiments of the disclosure.
FIG. 14B is a cross-sectional view illustrating a mount module taken along line 14b-14b of FIG. 13 according to various embodiments of the disclosure.
FIG. 15A is a cross-sectional view illustrating a mount module taken along line 15a-15a of FIG. 11A according to various embodiments of the disclosure.
FIG. 15B is a cross-sectional view illustrating a mount module taken along line 15b-15b of FIG. 11B according to various embodiments of the disclosure.
FIGS. 16A to 16C illustrate examples of various holding structures mounted on a mount module according to various embodiments of the disclosure.

### [Mode for the Invention]

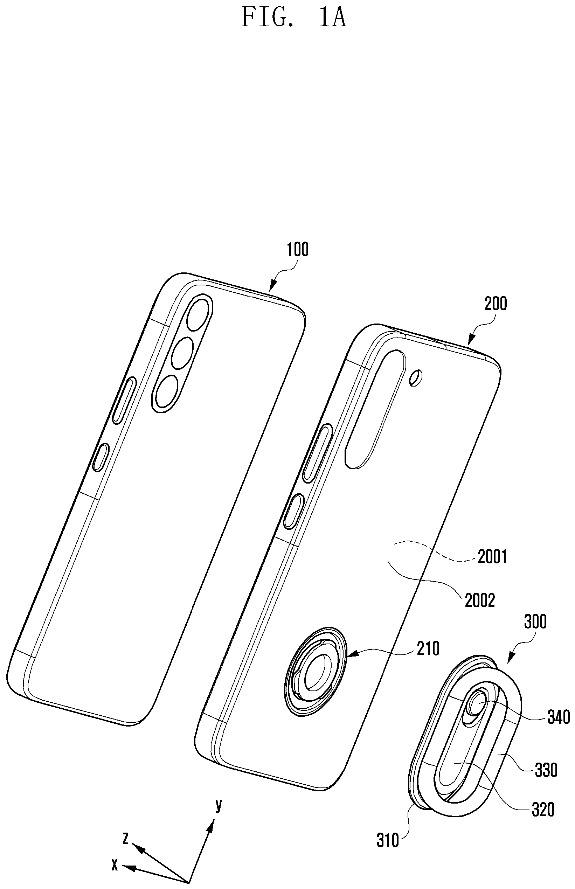

FIG. 1A is an exploded perspective view illustrating an electronic device and a holding accessory according to various embodiments of the disclosure.

With reference to FIG. 1A, holding accessories 200 and 300 may include a protective cover 200 detachably coupled to cover at least a portion of an electronic device 100 (e.g., portable electronic device or portable communication device) and a mount module 300 detachably coupled to the protective cover 200. In an embodiment, the protective cover 200 may include an inner surface 2001 and an outer surface 2002. In an embodiment, the electronic device 100 may be coupled in a manner that contacts at least a portion of the inner surface 2001 of the protective cover 200. In an embodiment, the mount module 300 may be detachably coupled to a module mounting part 210 disposed at an outer surface of the protective cover 200. In an embodiment, the module mounting part 210 may be formed integrally with the protective cover 200 or may be disposed in a manner structurally coupled to the protective cover 200.

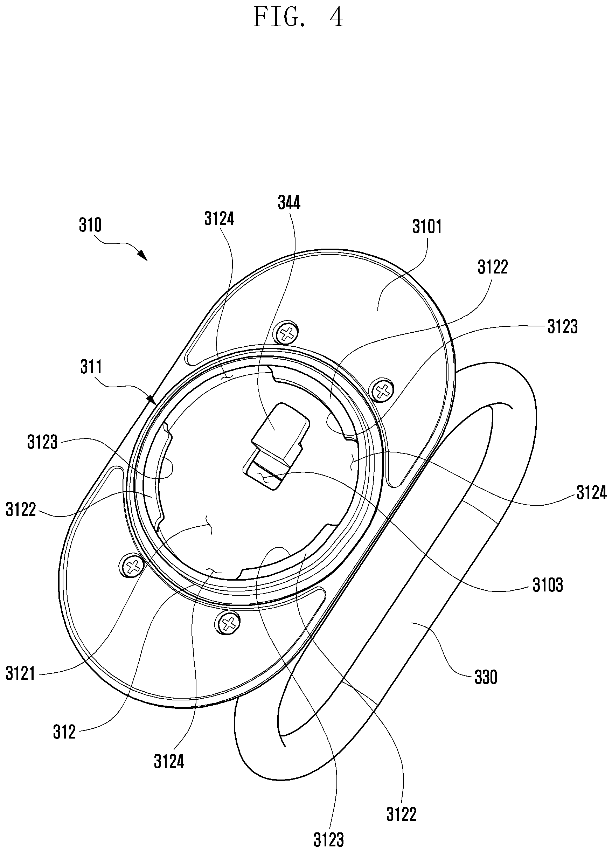

According to various embodiments, the mount module 300 may include a holder mount 310 including a holder part (e.g., a holder part 311 of FIG. 4) for being coupled to the module mounting part 210, a cover 320 (e.g., upper cover or upper surface cover) coupled to the holder mount 310, a rocker member 340 slidably coupled between the cover 320 and the holder mount 310, and a ring holder 330 as a holding structure rotatably coupled between the cover 320 and the holder mount 310. In an embodiment, after the holder part 311 of the holder mount 310 is seated on the module mounting part 210 of the protective cover 200, the holder part 311 is temporarily coupled to the module mounting part 210 through a rotation operation, and maintains the coupled state through a locking operation of the rocker member 340, thereby helping improve operation reliability. In an embodiment, the ring holder 330 may be rotated at a designated angle from the mount module 300 and maintain the rotated state (e.g., free stop function), thereby assisting a holding operation.

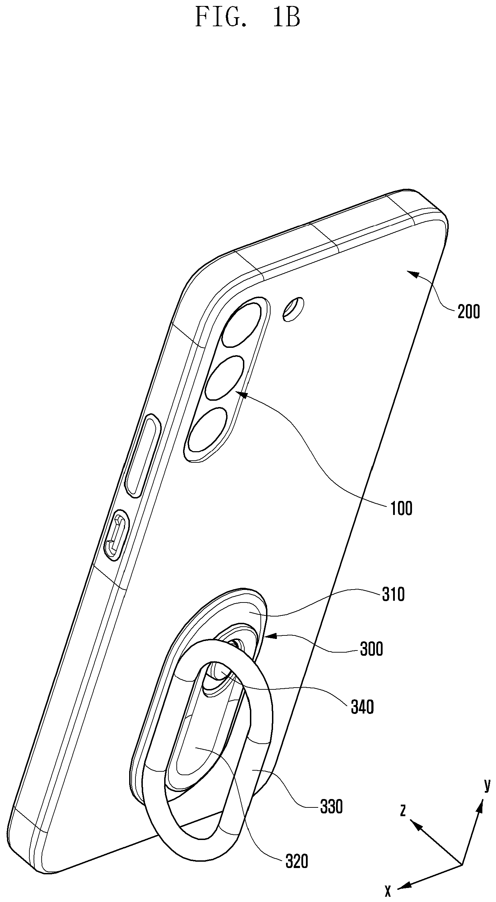

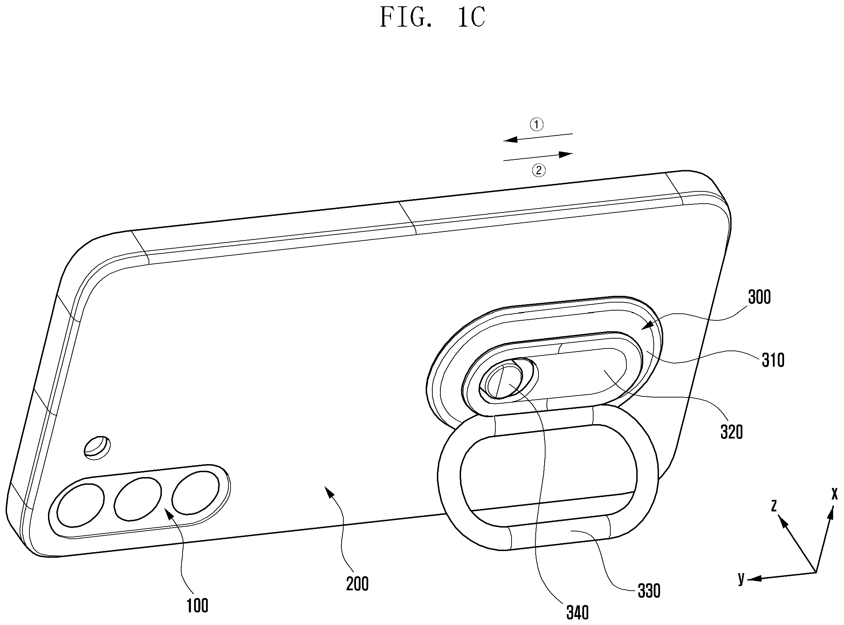

FIGS. 1B and 1C are perspective views illustrating a use state of a holding accessory coupled to an electronic device according to various embodiments of the disclosure.

With reference to FIGS. 1B and 1C, the protective cover 200 may be mounted in a manner that wraps around at least a portion of the electronic device 100, and the mount module 300 may be mounted on an outer surface 2002 of the protective cover 200. In this case, the protective cover 200 may be mounted to wrap around the entire rear and side surfaces of the electronic device 100. In an embodiment, after the mount module 300 is coupled to the protective cover 200, when at least a portion of the rocker member 340 exposed to the cover 320 is moved in a first direction (direction ①), the state of the mount module 300 coupled to the protective cover 200 may be continuously maintained, and a phenomenon in which the mount module 300 is arbitrarily detached from the protective cover 200 may be prevented. In an embodiment, when at least a portion of the rocker member 340 exposed to the cover 320 is moved in a second direction (direction ②) opposite to the first direction (direction ①), the mount module 300 may be separated from the protective cover 200 through a rotation.

According to various embodiments, the electronic device 100 may be held horizontally or vertically at a designated angle from a holding surface through the ring holder 330 rotated by a designated angle from the mount module 300, thereby improving convenience of use. In an embodiment, the ring holder may be formed in a ring type, thereby helping the user to grip the ring holder with the finger.

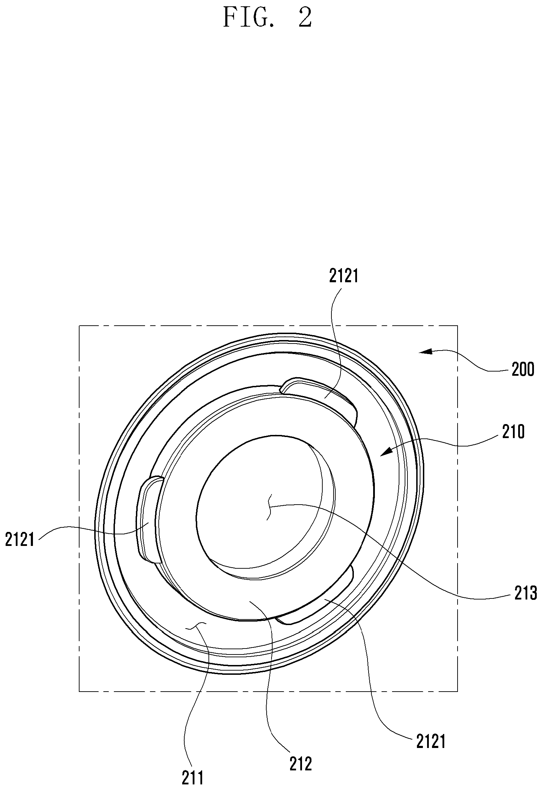

FIG. 2 is a perspective view illustrating a portion of a module mounting part according to various embodiments of the disclosure.

With reference to FIG. 2, a module mounting part 210 may include a holder guide groove 211 formed at an outer surface 2002 of the protective cover 200 and a circular protruding portion 212 (e.g., ring-type protruding portion) protruded from the holder guide groove 211 and including a rocker receiving groove 213. In an embodiment, the rocker receiving groove 213 and the circular protruding portion 212 may be formed to have a concentric circle. In an embodiment, the module mounting part 210 may include a plurality of protruding ribs 2121 protruded from an outer circumferential surface of the protruding portion 212 in a direction of the holder guide groove 211. In an embodiment, the plurality of protruding ribs 2121 may be disposed at three locations at a designated angle (e.g., 120 degrees) interval from the outer circumferential surface of the protruding portion 212. In some embodiments, the protruding rib 2121 may be disposed at one location. In some embodiments, the protruding ribs 2121 may be disposed at two locations or four or more locations at designated angle intervals.

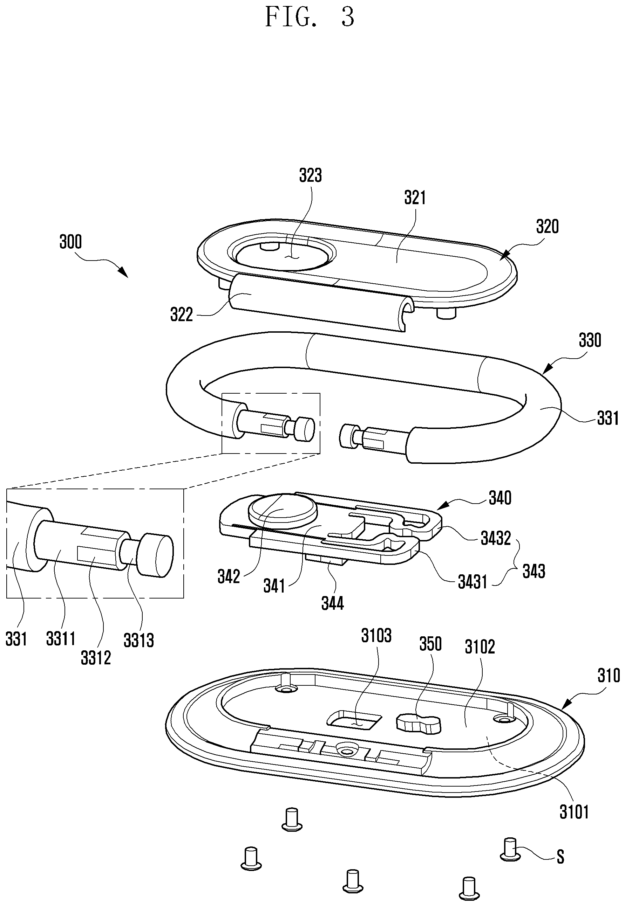

FIG. 3 is an exploded perspective view illustrating a mount module according to various embodiments of the disclosure.

With reference to FIG. 3, the mount module 300 may include a holder mount 310 that comes into contact with the outer surface 2002 of the protective cover 200, a cover 320 coupled to the holder mount 310, a rocker member 340 slidably coupled in a space between the cover 320 and the holder mount 310, and a ring holder 330 as a holding structure rotatably disposed between the holder mount 310 and a hinge housing 322 extended from the cover 320.

According to various embodiments, the holder mount 310 may include a first surface 3101 corresponding to an outer surface of the protective cover 200 and a second surface 3102 facing in a direction opposite to that of the first surface 3101. In an embodiment, the holder mount 310 may include an elastic support piece 350 disposed at the second surface 3102 and for maintaining a sliding movement position of the rocker member 340.

According to various embodiments, the cover 320 may include a cover body 321 for being coupled to the second surface 3102 of the holder mount 310 and a hinge housing 322 extended from the cover body 321 and for receiving the ring holder 330. In an embodiment, the cover 320 may include a through hole 323 formed such that a button portion 342 of the rocker member 340 is penetrated and is then exposed to the outside. In an embodiment, the through hole 323 may be formed in a size and/or shape in which the button portion 342 of the rocker member 340, which is exposed to the outside, may operate within a sliding operation range.

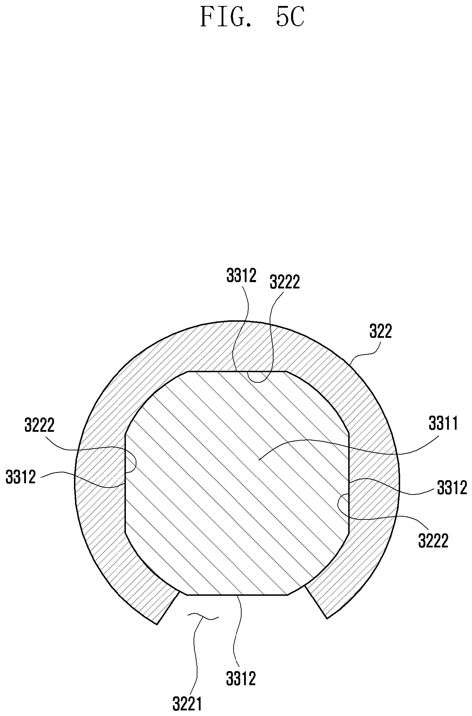

According to various embodiments, the ring holder 330 may include a ring portion 331 for gripping or holding by a user, a mounting shaft 3311 extended from the ring portion 331 and for being rotatably coupled to the hinge housing 322, and a hook shaft 3313 formed in at least a portion of the mounting shaft 3311 and prevented from detaching after being coupled to the hinge housing 322. In an embodiment, a diameter of the mounting shaft 3311 may be smaller than that of the ring portion 331. In an embodiment, a diameter of the hook shaft 3313 may be smaller than that of the mounting shaft 3311. In an embodiment, the ring holder 330 may include a plurality of cutting portions 3312 formed at an outer circumferential surface of the mounting shaft 3311. In an embodiment, the plurality of cutting portions 3312 may have a planar structure formed lower than a curved outer circumferential surface of the mounting shaft 3311. In an embodiment, the plurality of cutting portions 3312 may be formed at four locations at 90-degree designated intervals. These plurality of cutting portions 3312 may be formed to have a cutting amount corresponding to a plurality of filling portions (e.g., filling portions 3222 of FIG. 5C) (e.g., overlapping portion) protruded from the curved inner circumferential surface of the hinge housing 322. Accordingly, when the ring holder 330 is rotated, the plurality of cutting portions 3312 are detached from the plurality of filling portions 3222, and outer circumferential surfaces of the mounting shaft 3311, excluding the cutting portions 3312, are brought into tight contact with the filling portions 3222, and then come into contact again with the neighboring filling portions 3222, thereby helping the ring holder 330 to maintain positions thereof at a designated rotation angle (e.g., to maintain positions thereof at a bending angle) or to maintain a designated rotation position (e.g., to have a free stop function).

According to various embodiments, the rocker member 340 may include a rocker body 341 slidably coupled to the second surface 3102 of the holder mount 310, a button portion 342 formed to be exposed from one surface of the rocker body 341 to a through hole 323 of the cover 320, a hook piece 344 formed to be protruded from the other surface opposite to one surface of the rocker body 341 to the rocker receiving groove (e.g., the rocker receiving groove 213 of FIG. 2) of the module mounting part (e.g., the module mounting part 210 of FIG. 2) through the through hole 3103 formed in the holder mount 310, and an elastic structure 343 elastically extended from the rocker body 341. In an embodiment, the elastic structure 343 may include a first tension rib 3431 and a second tension rib 3432 spaced apart from the rocker body 341 at a designated interval. In an embodiment, when the rocker member 340 is moved through a manipulation of the button portion 342, the first tension rib 3431 and the second tension rib 3432 may help maintain the rocker member 340 in an unlocked state or a locked state through elastic coupling with the elastic support piece 350 of the holder mount 310 disposed therebetween.

FIG. 4 is a perspective view illustrating a holder part of a holder mount according to various embodiments of the disclosure.

With reference to FIG. 4, the holder mount 310 may include a holder part 311 disposed at the first surface 3101 corresponding to an outer surface of the protective cover 200 and for being mounted on the module mounting part (e.g., the module mounting part 210 of FIG. 2). In an embodiment, the holder part 311 may include a receiving groove 3121 (e.g., rib receiving groove) for receiving the protruding portion (e.g., the protruding portion 212 of FIG. 2) of the module mounting part 210. In an embodiment, the receiving groove 3121 may include a through hole 3103 in which a hook piece 344 of the rocker member 340 slidably coupled to the second surface 3102 of the holder mount 310 may be protruded. In an embodiment, the receiving groove 3121 may be formed through a flange 312 protruded circularly from the first surface 3101. In an embodiment, the holder part 311 may include a plurality of holder ribs 3122 protruded in a direction of the receiving groove 3121 at intervals of a designated angle along an edge of the flange 312. In an embodiment, the holder ribs 3122 may be formed in the number corresponding to that of protruding ribs (e.g., the protruding ribs 2121 of FIG. 2) formed in the module mounting part 210. In an embodiment, the holder part 311 may include a guide groove 3123 provided through a space between the holder ribs 3122 and the receiving groove 3121. For example, the guide groove 3123 may include a receiving space for receiving the protruding ribs 2121 of the module mounting part 210 through rotation of the mount module 300, and the protruding ribs 2121 may be prevented from detaching through the holder ribs 3122.

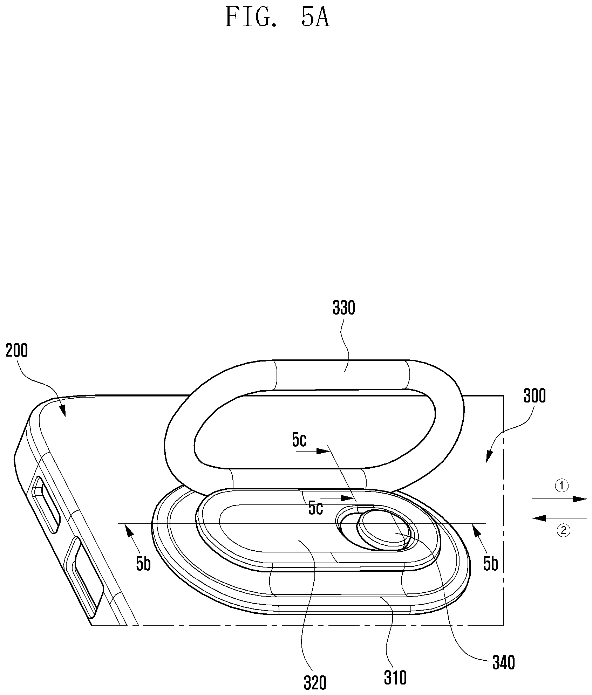

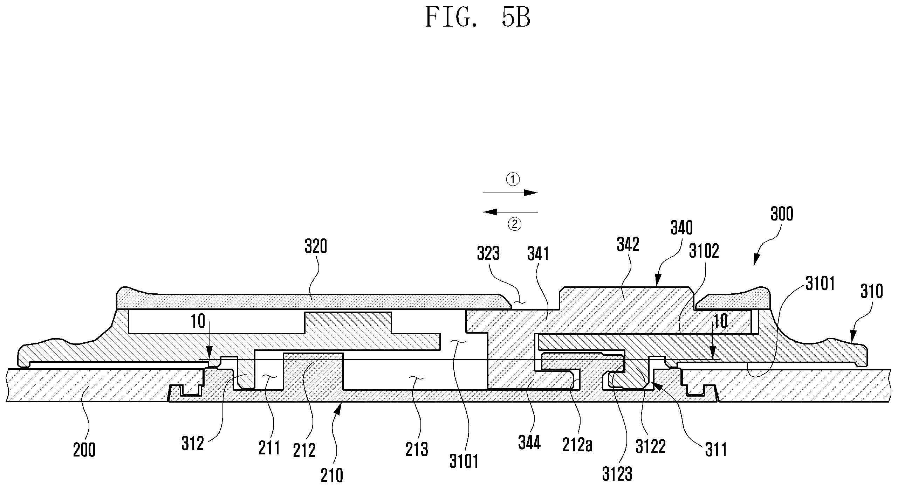

FIG. 5A is a partial perspective view illustrating a state in which a mount module is mounted on a protective cover according to various embodiments of the disclosure. FIG. 5B is a cross-sectional view illustrating a mount module taken along line 5b-5b of FIG. 5A according to various embodiments of the disclosure.

With reference to FIGS. 5A and 5B, when the mount module 300 is mounted on the protective cover 200, the protruding portion 212 of the module mounting part 210 may be seated in the receiving groove 3121 of the holder part 311. In this case, the protrusion ribs 2121 may be received in a space 3124 between the holder ribs 3122. Thereafter, when the mount module 300 is rotated in a first rotation direction, the plurality of protrusion ribs 2121 are seated in the guide grooves 3123 formed between the holder ribs 3122 and the receiving grooves 3121, and are hooked in the holder rib 3122; thus, the detachment of the holder mount 310 is prevented, and a temporary coupling state of the mount module 300 may be maintained.

According to various embodiments, when the rocker member 340 is moved in the first direction (direction ①) through a manipulation of the button portion **342 in a** temporarily coupled state of the mount module 300, the hook piece 344 protruded to the rocker receiving groove 213 of the module mounting part 210 through the through hole 3103 of the holder mount 310 is hooked in the hook groove 212a formed in the protruding portion 212, thereby completing coupling of the mount module 300. Conversely, when the rocker member 340 is moved in the second direction (direction ②) through a manipulation of the button portion 342, the hook piece 344 may be detached from the hook groove 212a. Thereafter, when the mount module 300 is rotated in a second rotation direction opposite to the first rotation direction, the protruding ribs 2121 of the module mounting part 210 are moved into the space 3124 between the holder ribs 3122 and are detached from the guide groove 3123; thus, the mount module 300 may be easily separated from the protective cover 200.

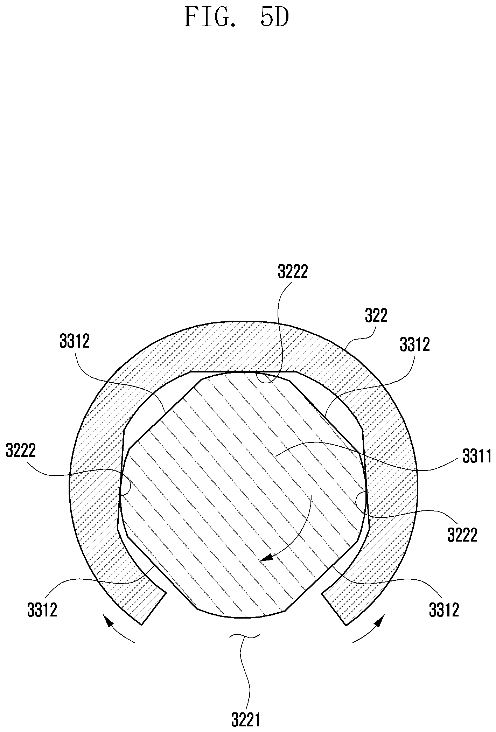

FIG. 5C is a cross-sectional view illustrating a mount module taken along line 5c-5c of FIG. 5A according to various embodiments of the disclosure. FIG. 5D is a cross-sectional view of a mount module illustrating a contact state with a hinge housing according to rotation of a ring holder according to various embodiments of the disclosure.

With reference to FIGS. 5C and 5D, the ring holder 330 may include a plurality of cutting portions 3312 formed at an outer circumferential surface of the mounting shaft 3311. In an embodiment, the plurality of cutting portions 3312 may have a planar structure formed lower than a curved outer circumferential surface of the mounting shaft 3311. In an embodiment, the plurality of cutting portions 3312 may be formed at four locations at 90-degree designated intervals, but the disclosure is not limited thereto. For example, the plurality of cutting portions may be formed at two locations, three locations, or five or more locations. In some embodiments, the ring holder 330 may include one cutting portion 3312.

According to various embodiments, the hinge housing 322 may include a plurality of filling portions 3222 (e.g., overlapping portions) protruded from the curved inner circumferential surface. In an embodiment, the plurality of filling portions 3222 may be formed to have a filling amount corresponding to a cutting amount of the plurality of cutting portions 3312. Accordingly, when the ring holder 330 is rotated, the plurality of cutting portions 3312 are detached from the plurality of filling portions 3222, and outer circumferential surfaces of the mounting shaft 3311, excluding the cutting portions 3312, may be brought into tight contact with the filling portions 3222. For example, the hinge housing 322 may include an opening portion 3221 that is partially open, and when the outer circumferential surfaces except for the cutting portions 3312 come into contact with the filling portions 3222, the hinge housing 322 may be spread through the opening portion 3221, thereby pressing the outer circumferential surface of the mounting shaft 3311 with a relatively strong pressing force. Thereafter, through a continued rotation of the ring holder 330, the cutting portions 3312 may come into contact with the neighboring filling portions 3222 again, thereby helping the ring holder 330 to maintain positions thereof at a designated rotation angle (e.g., to maintain positions thereof at a bending angle) or to maintain a designated rotation position (e.g., to provide a free stop function).

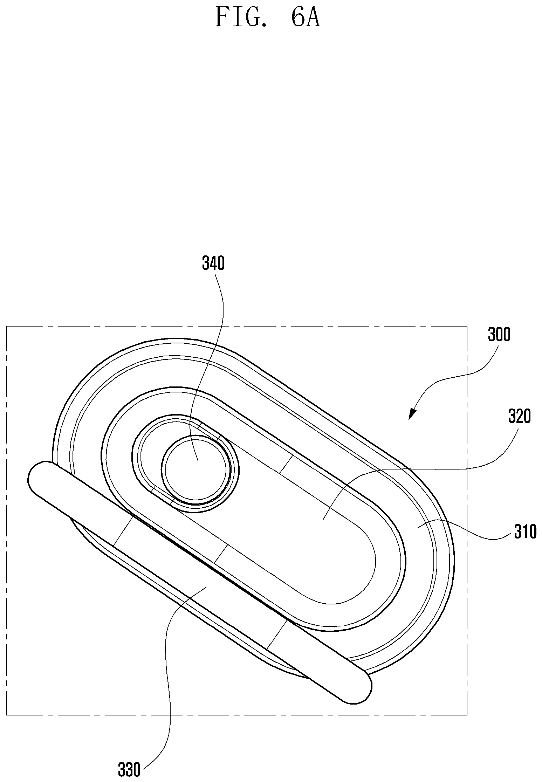

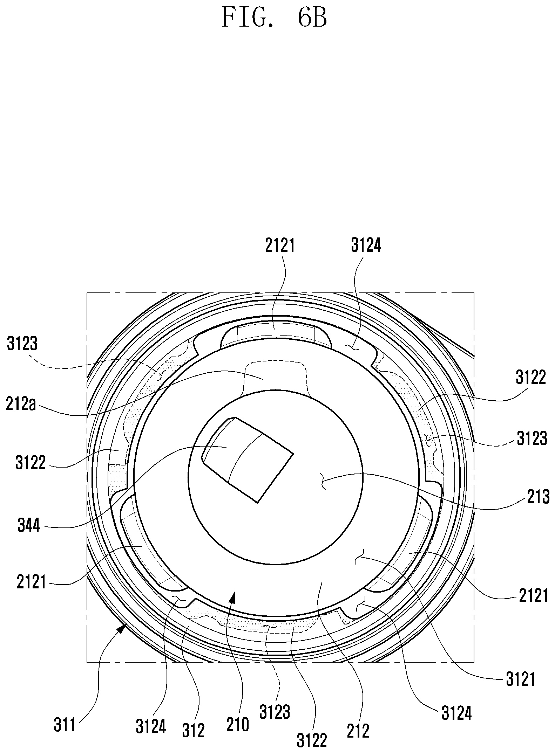

FIGS. 6A and 6B are diagrams illustrating a state before a mount module is rotated according to various embodiments of the disclosure.

With reference to FIGS. 6A and 6B, when the mount module 300 is mounted on the protective cover 200, the protruding portion 212 of the module mounting part 210 may be seated in the receiving groove 3121 of the holder part 311. In this case, the protrusion ribs 2121 may be received in the space 3124 between the holder ribs 2122. Thereafter, when the mount module 300 is rotated in the first rotation direction, the plurality of protrusion ribs 2121 are seated in the guide groove 3123 formed between the holder rib 3122 and the receiving groove 3121, and are hooked in the holder rib 3122; thus, the detachment of the holder mount 310 is prevented, and a temporary coupling state of the mount module 300 may be maintained. In an embodiment, when the rocker member 340 is moved in the first direction (direction ①) through a manipulation of the button portion 342 in a temporarily coupled state of the mount module 300, the hook piece 344 protruded to the rocker receiving groove 213 of the module mounting part 210 through the through hole 3103 of the holder mount 310 is hooked in the hook groove 212a formed in the protruding portion 212, thereby completing coupling of the mount module 300.

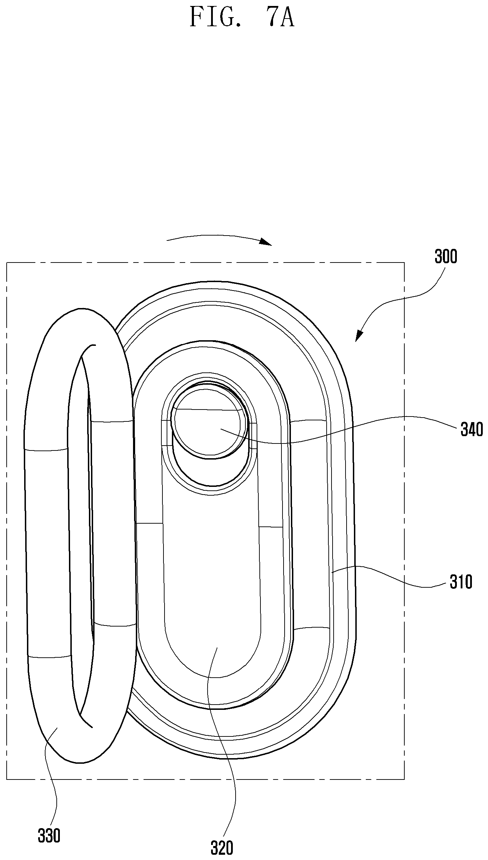

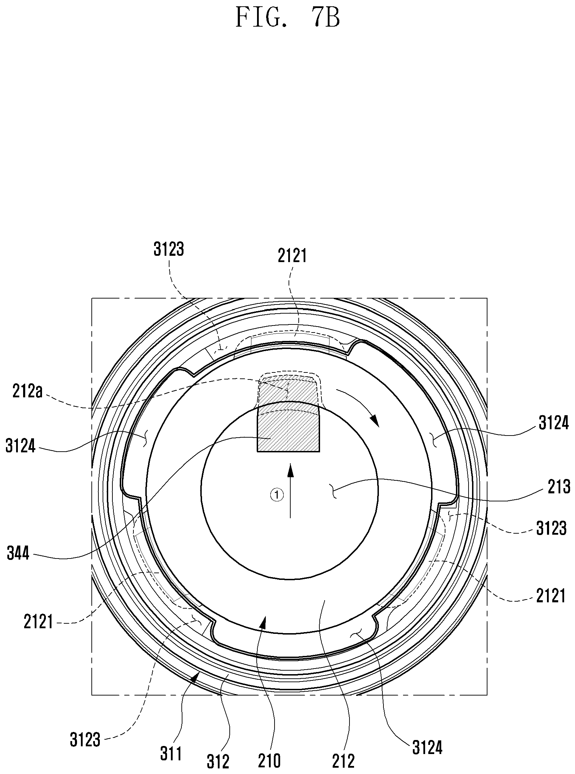

FIGS. 7A and 7B are diagrams illustrating a state in which a mount module is rotated and then fastened through a rocker member according to various embodiments of the disclosure.

In describing FIGS. 7A and 7B, the same reference numerals are given to substantially the same components as the mount module 300 of FIGS. 6A and 6B, and a detailed description thereof may be omitted.

With reference to FIGS. 7A and 7B, when the rocker member 340 is moved in the second direction (direction ②) through a manipulation of the button portion 342, the hook piece 344 may be detached from the hook groove 212a. Thereafter, when the mount module 300 is rotated in the second rotation direction opposite to the first rotation direction, the protruding ribs 2121 of the module mounting part 210 are moved to the space 3124 between the holder ribs 3122 and are detached from the guide groove 3123; thus, the mount module 300 may be easily separated from the protective cover 200.

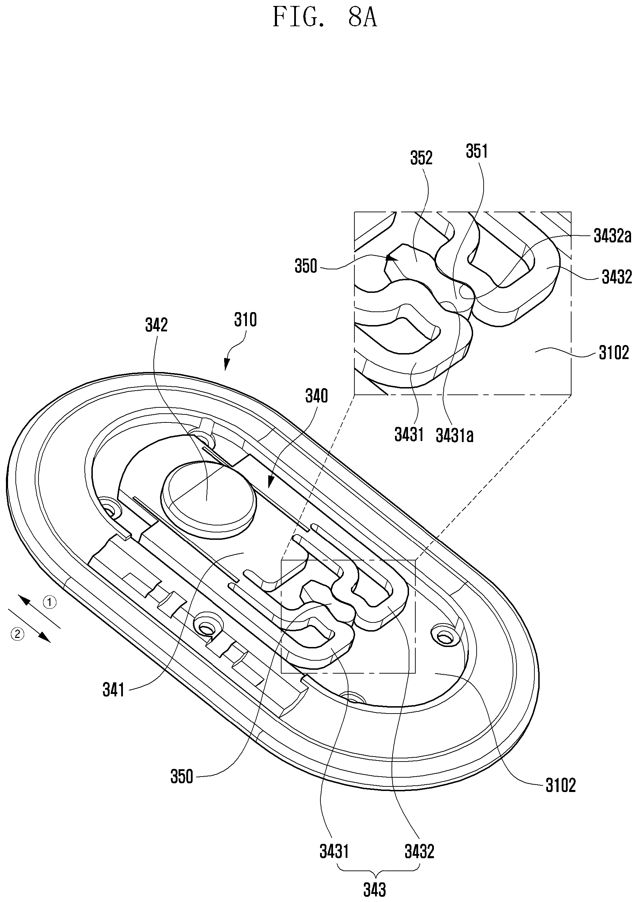

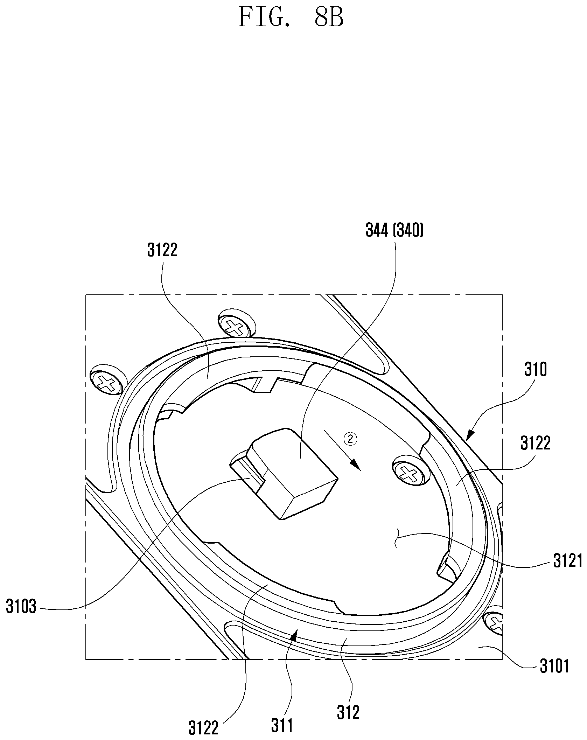

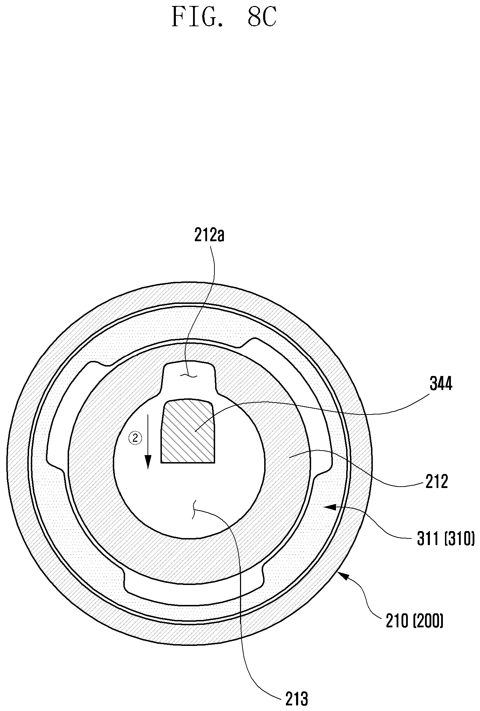

FIGS. 8A to 8C are diagrams illustrating a state in which a rocker member is released from a hook groove according to various embodiments of the disclosure.

With reference to FIGS. 8A to 8C, the mount module 300 may include a rocker member 340 slidably coupled to the second surface 3102 of the holder mount 310. In an embodiment, the rocker member 340 may include a rocker body 341 slidably coupled to the second surface 3102 of the holder mount 310, a button portion 342 formed to be exposed from one surface of the rocker body 341 to a through hole (e.g., the through hole 323 of FIG. 3) of the cover 320, a hook piece 344 formed to be protruded from the other surface opposite to one surface of the rocker body 341 to the rocker receiving groove 213 of the module mounting part 210 through the through hole 3103 formed in the holder mount 310, and an elastic structure 343 elastically extended from the rocker body 341.

According to various embodiments, the elastic structure 343 may include a first tension rib 3431 and a second tension rib 3432 spaced apart from the rocker body 341 at a designated interval. In an embodiment, the first tension rib 3431 and the second tension rib 3432 may include a first recess 3431a and a second recess 3432a formed to face each other. In an embodiment, the first tension rib 3431 and the second tension rib 3432 may be disposed at a designated interval and formed to have a restoring force to restore to an original state in the case of being spread apart from each other.

According to various embodiments, the mount module 300 may include an elastic support piece 350 disposed in a space between the first tension rib 3431 and the second tension rib 3432 at the second surface 3102 of the holder mount 310. In an embodiment, the elastic support piece 350 may include a first hook portion 351 and a second hook portion 352 for selectively contacting the first recess 3431a and the second recess 3432a according to a sliding operation of the rocker member 340. In an embodiment, the elastic support piece 350 may be formed integrally with the holder mount 310 or structurally coupled to the holder mount 310.

According to various embodiments, in a state in which the hook piece 344 of the rocker member 340 is detached from the hook groove 212a of the module mounting part 210, the first and second recesses 3431a and 3432a of the first tension rib 3431 and the second tension rib 3432 of the rocker member 340 are hooked in the first hook portion 351 of the elastic support piece 350, thereby maintaining a release position of the rocker member 340 and inducing a temporary coupling state for separation of the mount module 300.

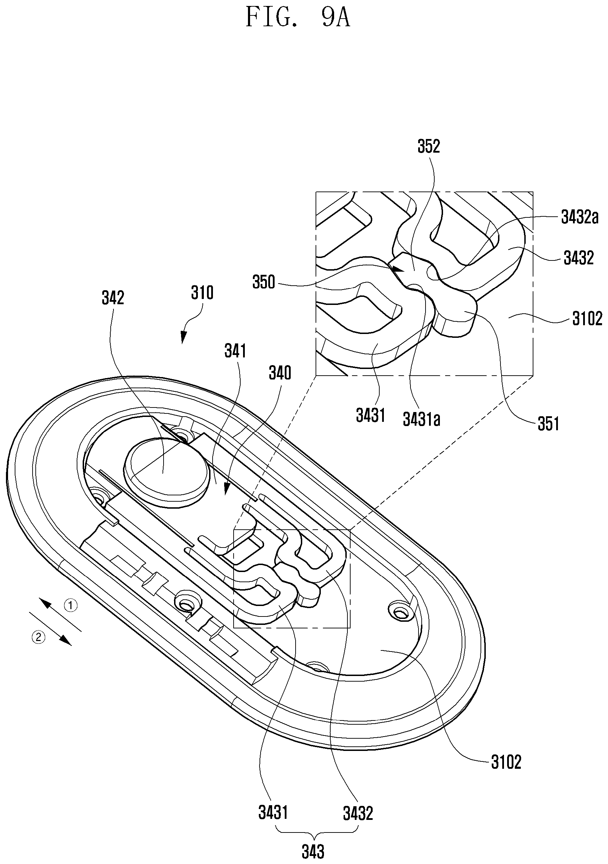

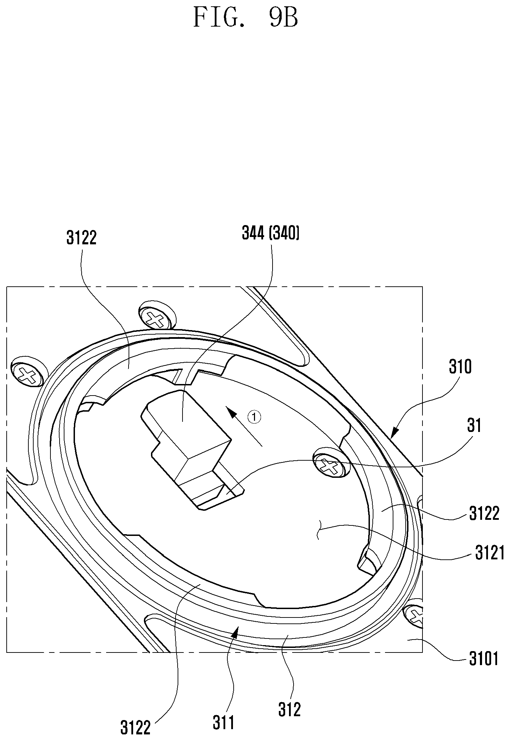

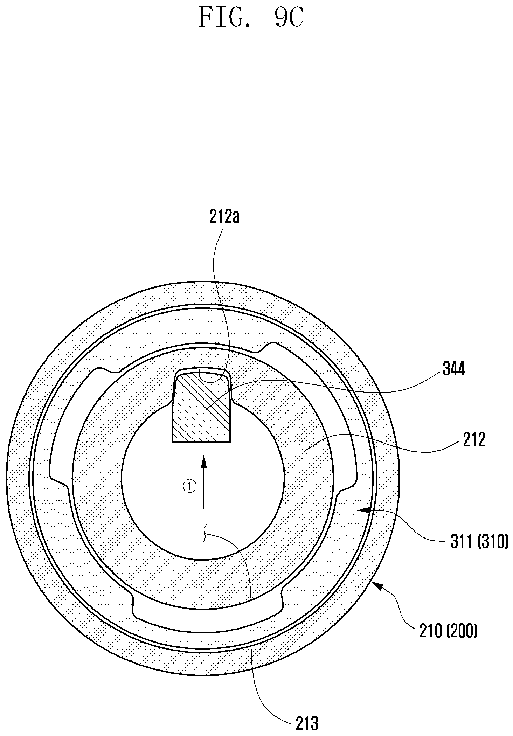

FIGS. 9A to 9C are diagrams illustrating a state in which a rocker member is fastened to a hook groove according to various embodiments of the disclosure.

In describing FIGS. 9A to 9C, the same symbols are given to substantially the same components as the coupling structure of the rocker member 340 and the elastic support piece 350 of FIGS. 8A to 8C, and a detailed description thereof may be omitted.

With reference to FIGS. 9A to 9C, when the rocker member 340 is moved in the first direction (direction ①), the hook piece 344 of the rocker member 340 is drawn into the hook groove 212a of the module mounting part 210, thereby inducing a locked state of the mount module 300. In this case, in a state in which the hook piece 344 of the rocker member 340 is drawn into the hook groove 212a of the module mounting part 210, the first and second recesses 3431a and 3432a of the first tension rib 3431 and the second tension rib 3432 of the rocker member 340 are hooked in the second hook portion 352 of the elastic support piece 350; thus, a holding position of the rocker member 340 may be maintained.

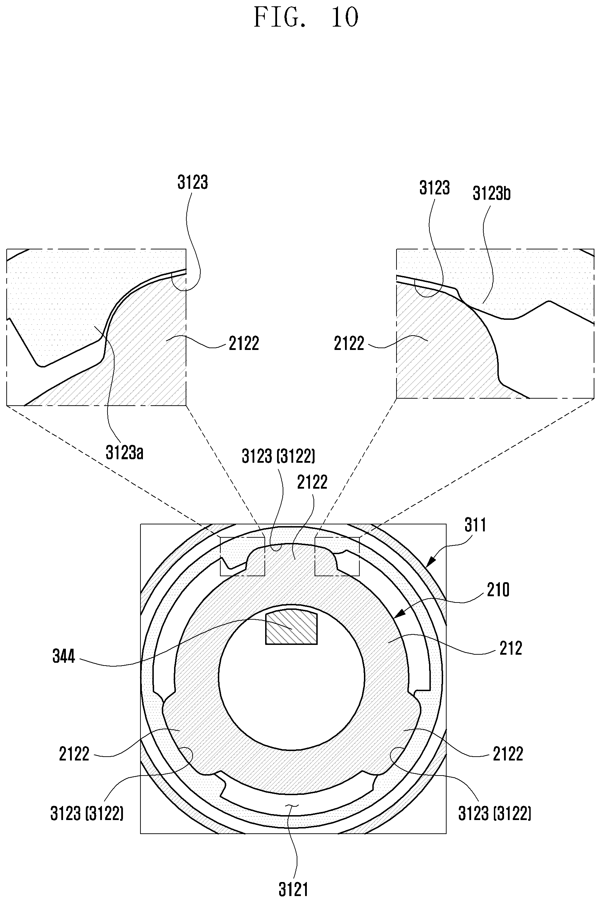

FIG. 10 is a cross-sectional view illustrating a mount module taken along line 10-10 of FIG. 5B according to various embodiments of the disclosure.

With reference to FIG. 10, when the mount module 300 is mounted on the protective cover 200, the protruding portion 212 of the module mounting part 210 may be seated in the receiving groove 3121 of the holder part 311. In this case, the protrusion ribs 2121 may be received in a space (e.g., the space 3124 of FIG. 4) between the holder ribs 3122. Thereafter, when the mount module 300 is rotated, the plurality of protrusion rib 2121 are seated in the guide groove 3123 formed between the holder ribs 3122 and the receiving grooves 3121, and are hooked in the holder rib 3122; thus, the detachment of the holder mount 310 may be prevented, and a temporary coupling state of the mount module 300 may be maintained.

According to various embodiments, the mount module 300 may include a first stopper 3123a and a second stopper 3123b protruded from the guide groove 3123 in order to maintain the position of the protruding rib 2121 so that the protruding rib 2121 cannot rotate any further after being received in the guide groove 3123. In an embodiment, the first stopper 3123a and the second stopper 3123b may be formed to have a designated protruding amount from an inner surface of the guide groove 3123 in a direction of the center of the receiving groove 3121. In an embodiment, a position of the protruding rib 2121 may be maintained by the first stopper 3123a so that the protruding rib 2121 cannot rotate any further in the same direction after being received in the guide groove 3123. In an embodiment, a position of the protruding rib 2121 may be maintained by the second stopper 3123b so that the protruding rib 2121 cannot rotate any further in the opposite direction after being received in the guide groove 3123. In an embodiment, a protruding amount of the first stopper 3123a may be greater than that of the second stopper 3123b. In some embodiments, the protruding amount of the first stopper 3123a may be substantially the same as or smaller than that of the second stopper 3123b.

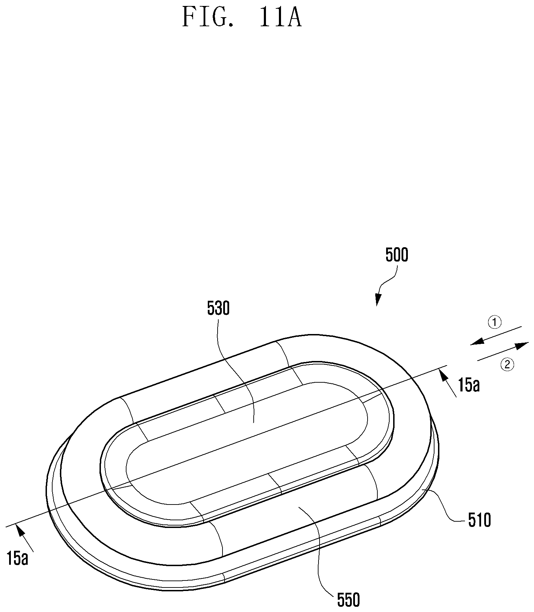

Hereinafter, FIGS. 11A to 15B may be described with respect to a mount module 500 according to an embodiment of the disclosure. For example, coupling structures between the mount module 500 and the module mounting portion (e.g., the module mounting portion 210 of FIG. 2) of the protective cover (e.g., the protective cover 200 of FIG. 1A) (e.g., a guide groove (e.g., the guide groove 3123 of FIG. 4) seating structure of the protruding rib (e.g., the protruding rib 2121 of FIG. 2) through rotation of the mount module 500 and a locking structure of the hook groove (e.g., the hook groove 212a of FIG. 5B) through the rocker member (e.g., the rocker member 340 of FIG. 5B) are substantially the same; thus, a detailed description thereof may be omitted.

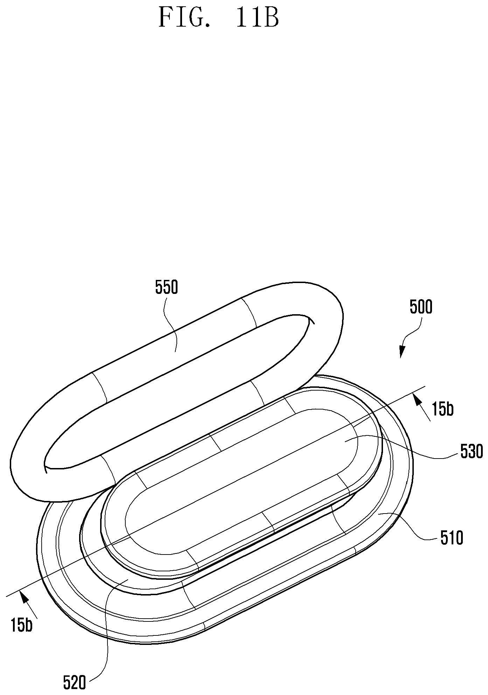

FIGS. 11A and 11B are perspective views illustrating an operation of a mount module according to various embodiments of the disclosure.

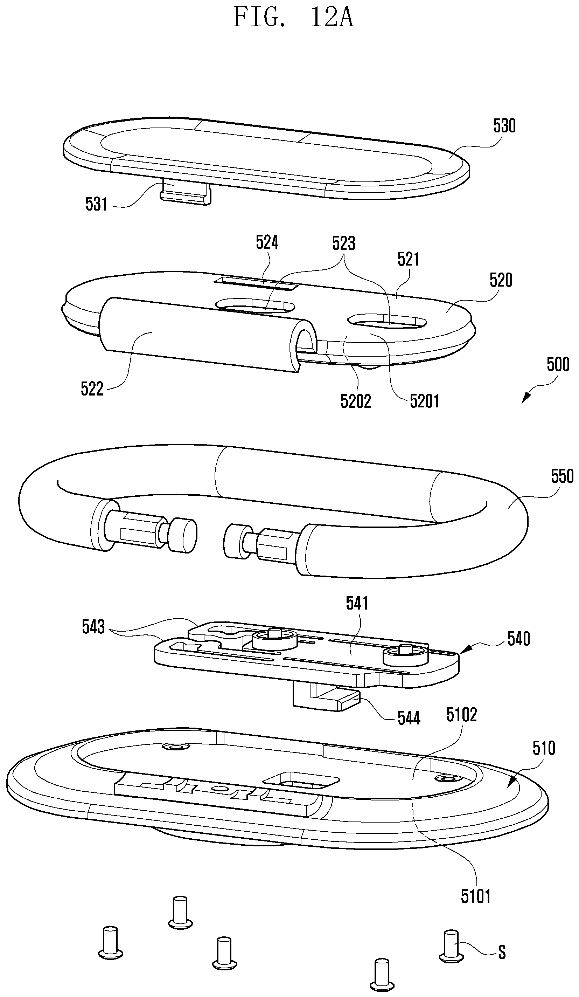

With reference to FIGS. 11A and 11B, the mount module 500 may include a holder mount 510, a cover 520 (e.g., intermediate cover) coupled with the holder mount 510, a slide cover 530 slidably coupled from the cover 520, and a ring holder 550 as a holding structure rotatably coupled to a hinge housing (e.g., a hinge housing 522 of FIG. 12A) of the cover 520. In an embodiment, the mount module 500 may maintain a locked state when moved in the first direction (direction ①), and be changed to an unlocked state when moved in the second direction (direction ②) opposite to the first direction (direction ①). In an embodiment, in a state in which the ring holder 550 is folded to come into contact with the holder mount 510, the mount module 500 may maintain a locked state, and the movement of the slide cover 530 may be restricted. In an embodiment, the slide cover 530 may induce the release of the mount module 500 by moving in the second direction (direction ②) in a state in which the ring holder 550 is unfolded at a designated angle from the holder mount 510. Accordingly, in a state in which the mount module 500 is mounted on the protective cover (e.g., the protective cover 200 of FIG. 1A), in the case that a function (e.g., holding function) through the ring holder 550 is not performed, the mount module 500 may help prevent from being arbitrarily detached from the protective cover 200.

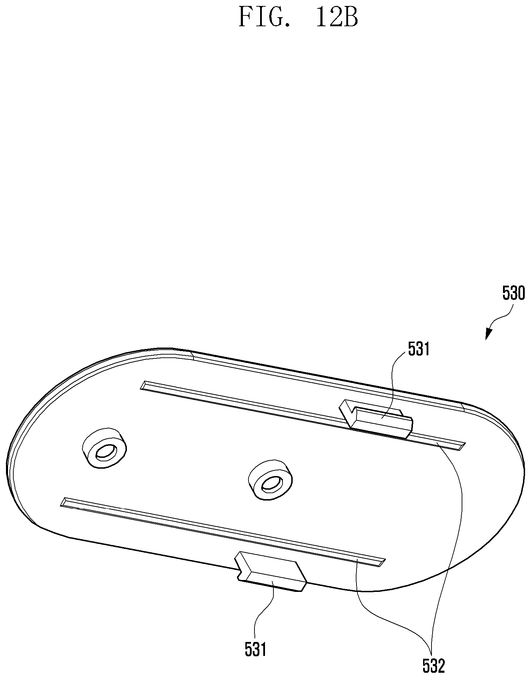

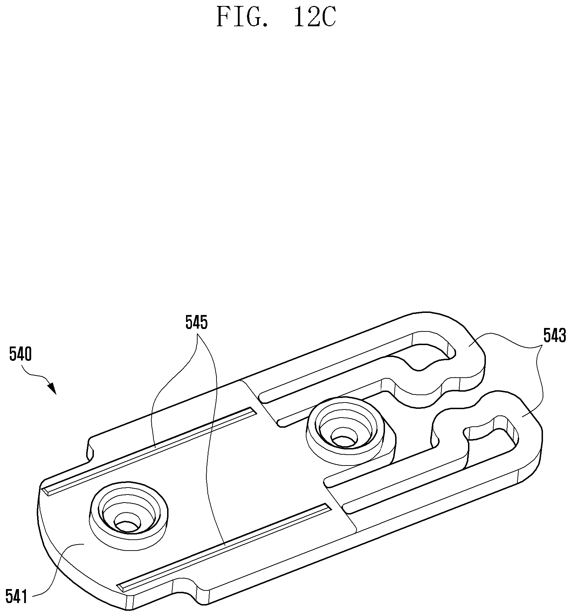

FIG. 12A is an exploded perspective view illustrating a mount module according to various embodiments of the disclosure. FIG. 12B is a perspective view illustrating a slide cover according to various embodiments of the disclosure. FIG. 12C is a perspective view illustrating a rocker member according to various embodiments of the disclosure.

With reference to FIGS. 12A to 12C, the mount module 500 may include a holder mount 510 that comes into contact with a protective cover (e.g., the protective cover 200 of FIG. 1A), a cover 520 coupled to the holder mount 510, a slide cover 530 slidably disposed in an upper portion of the cover 520, a rocker member 540 disposed between the holder mount 510 and the cover 520, and coupled with the slide cover 530 with the cover 520 therebetween so as to operate together in a sliding manner, and a ring holder 550 as a holding structure rotatably disposed between the holder mount 510 and the hinge housing 522 extended from the cover 520. In an embodiment, the ring holder 550 may include a cutting portion having substantially the same structure as that of the cutting portion 3312 of FIGS. 5C and 5D.

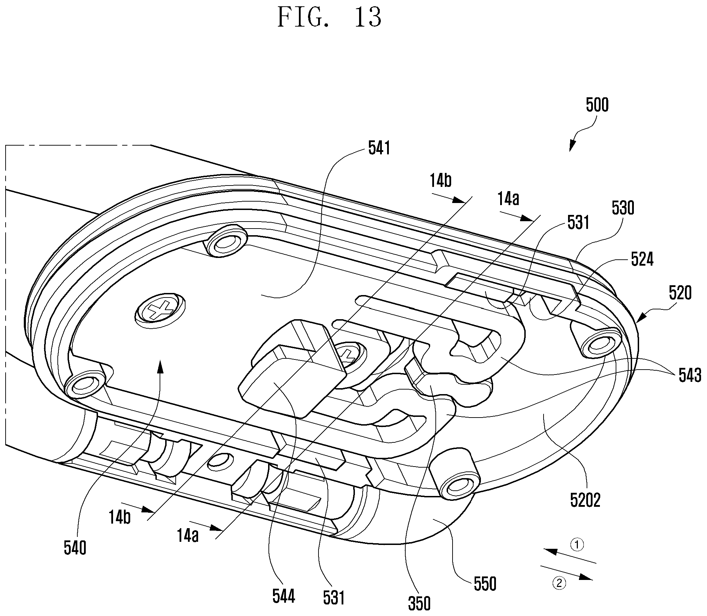

According to various embodiments, the holder mount 510 may include a first surface 5101 corresponding to an outer surface of a protective cover (e.g., the protective cover 200 of FIG. 1A) and a second surface 5102 facing in a direction opposite to that of the first surface 5101. In an embodiment, the holder mount 510 may include an elastic support piece (e.g., an elastic support piece 350 of FIG. 13) disposed at the second surface 5102 and for maintaining a sliding movement position of the rocker member 540.

According to various embodiments, the cover 520 may include a cover body 521 for being coupled to a second surface 5102 of the holder mount 510, and a hinge housing 522 extended from the cover body 521 and for receiving the ring holder 550. In an embodiment, the cover 520 may include through holes 523 formed in the cover body 521 and for providing a coupling structure between the slide cover 530 disposed at the upper surface 5201 and the rocker member 540 disposed at the rear surface 5202. In an embodiment, the cover 520 may include a hook guide hole 524 formed in the cover body 521 and having a length and shape in which a guide hook 531 of the slide cover 530 may be penetrated and then guided.

According to various embodiments, the rocker member 540 may include a rocker body 541, an elastic structure 543 (e.g., the elastic structure 343 of FIG. 3) extended from the rocker body 541, and a hook piece 544 (e.g., the hook piece 344 of FIG. 3) protruded from the rocker body 541. In an embodiment, a locking structure for maintaining a position of the rocker member 540 through the elastic structure 543 and the hook piece 544 and a hook structure through the elastic structure 543 may be substantially the same as a locking structure for maintaining a position of the rocker member 340 of the mount module 300 of FIG. 5B and a hook structure in which the hook piece 344 is hooked in the hook groove 212a.

According to various embodiments, the larger a contact area of the slide cover 530 that comes into contact with the upper surface 5201 of the cover 520, the greater the frictional force that impedes the sliding operation. Accordingly, the slide cover 530 may have at least one friction-reducing protrusion 532 protruded at the contact surface that comes into contact with the cover 520.

According to various embodiments, the larger a contact area of the rocker member 540 that comes into contact with the rear surface 5202 of the cover 520, the greater the frictional force that impedes the sliding operation. Accordingly, the rocker member 540 may have at least one friction-reducing protrusion 545 protruded at the contact surface that comes into contact with the cover 520.

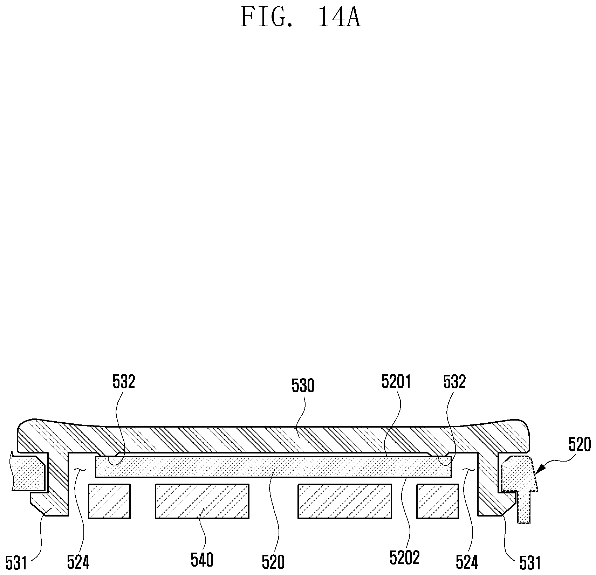

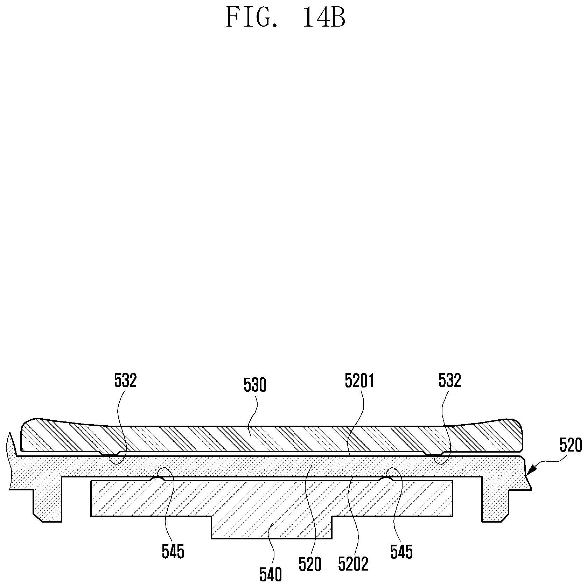

FIG. 13 is a perspective view illustrating a coupled mount module according to various embodiments of the disclosure. FIG. 14A is a cross-sectional view illustrating a mount module taken along line 14a-14a of FIG. 13 according to various embodiments of the disclosure. FIG. 14B is a cross-sectional view illustrating a mount module taken along line 14b-14b of FIG. 13 according to various embodiments of the disclosure.

With reference to FIGS. 13 to 14B, the mount module 500 may include a slide cover 530 disposed at the upper surface 5201 of the cover 520 with the cover 520 therebetween, and a rocker member 540 disposed at the rear surface 5202 of the cover 520. In an embodiment, at least a portion of the slide cover 530 may penetrate a portion of the cover 520 and then be coupled to the rocker member 540 through a fastening member such as a screw S. Accordingly, when the slide cover 530 is moved in a sliding manner at the upper surface 5201 of the cover 520, the rocker member 540 may also be moved correspondingly together at the rear surface 5202 of the cover 520.

With reference to FIGS. 14A and 14B, when the slide cover 530 and the rocker member 540 are movably assembled in the cover 520, the slide cover 530 reduces a contact area with the cover 520 through at least one friction-reducing protrusion 532 protruded at a contact surface that contacts the cover 520, thereby reducing the frictional force and helping to achieve a smooth sliding operation. In an embodiment, the rocker member 540 reduces the contact area with the cover 520 through at least one friction-reducing protrusion 545 protruded at a contact surface that contacts the cover 520, thereby reducing the frictional force and helping to achieve a smooth sliding operation.

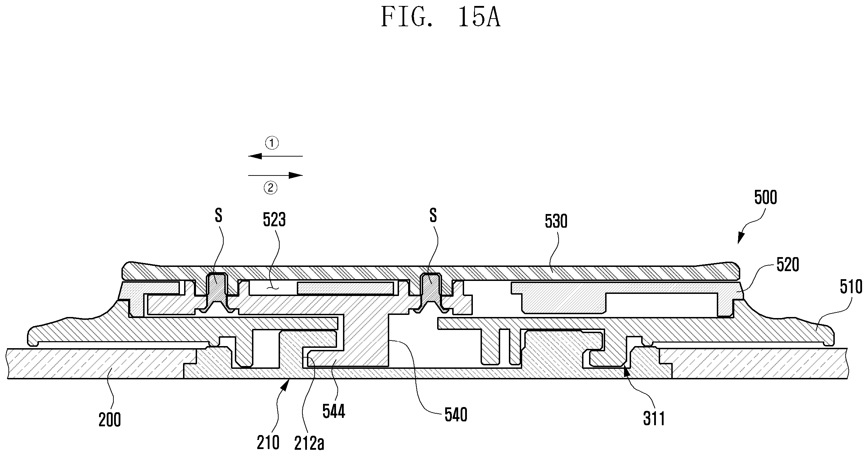

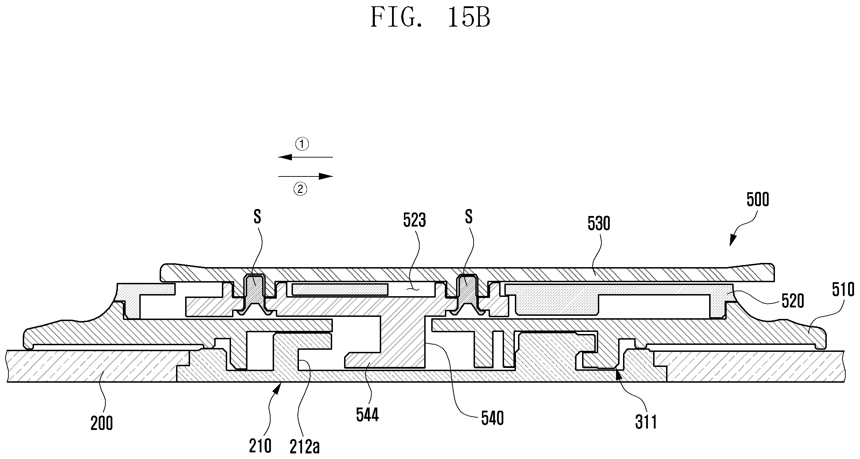

FIG. 15A is a cross-sectional view illustrating a mount module taken along line 15a-15a of FIG. 11A according to various embodiments of the disclosure. FIG. 15B is a cross-sectional view illustrating a mount module taken along line 15b-15b of FIG. 11B according to various embodiments of the disclosure.

With reference to FIGS. 15A and 15B, in a state in which the slide cover 530 is moved in the first direction (direction ①) so as to overlap with the cover 520 as a whole, the hook piece 544 of the rocker member 540 may be hooked in the hook groove 212a of the module mounting part 210 disposed in the protective cover 200, thereby maintaining a locked state. In this case, because the ring holder (e.g., the ring holder 550 of FIG. 11A) is disposed in a manner in which the slide cover 530 matches the cover 520, the state of being folded to be in contact with the holder mount 510 is maintained, thereby preventing the mount module 500 from being arbitrarily detached from the module mounting part 210 when carrying the electronic device.

According to various embodiments, the ring holder (e.g., the ring holder 550 of FIG. 11B) may be unfolded to have a designated angle from the holder mount 510. In this state, when the slide cover 530 is moved in the second direction (direction ②), the hook piece 544 of the rocker member 540 is detached from the hook groove 212a of the module mounting part 210; thus, the mount module 500 may be separated from the module mounting part 210. For example, even if the hook piece 544 is released from the hook groove 212a through the rocker member 540, a temporary coupling state of the mount module 500 may be maintained, and the mount module 500 may be completely separated from the module mounting part 210 through a rotation operation rotating at a designated angle, as in the mount module 300 of FIG. 5B described above.

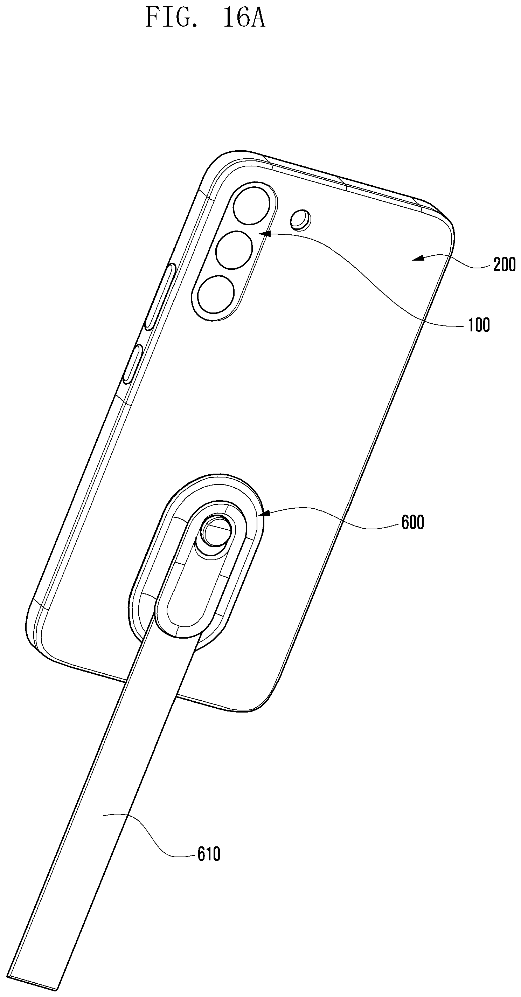

FIGS. 16A to 16C illustrate examples of various holding structures mounted on a mount module according to various embodiments of the disclosure.

In describing mount modules 600, 700, and 800 of FIGS. 16A to 16C, the same reference numerals are given to substantially the same components as those of the mount module of FIG. 1A, and a detailed description thereof may be omitted.

With reference to FIG. 16A, the mount module 600 may include a strap 610 as a holding structure. In an embodiment, the strap 610 may be mounted on a user's wrist, finger, arm, ankle, leg, head, neck, or waist to provide convenience of use.

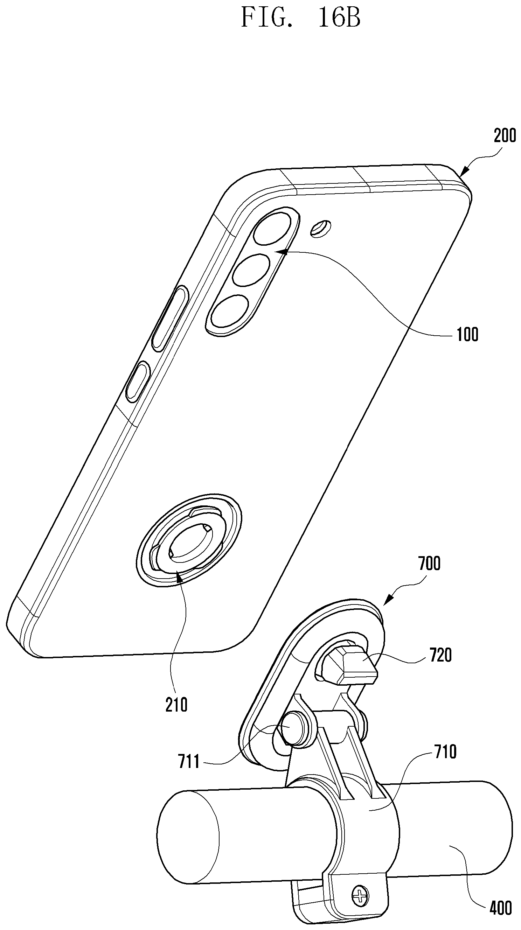

With reference to FIG. 16B, the mount module 700 is a holding structure and may include a bike holder 710 rotatably coupled thereto through a rotation member 711. In an embodiment, the bike holder 710 may be fastened to a handle bar 400 of a bike to provide convenience of use. In an embodiment, a button 720 exposed to the outside of the mount module 700 may be formed in a protruding shape for easy manipulation.

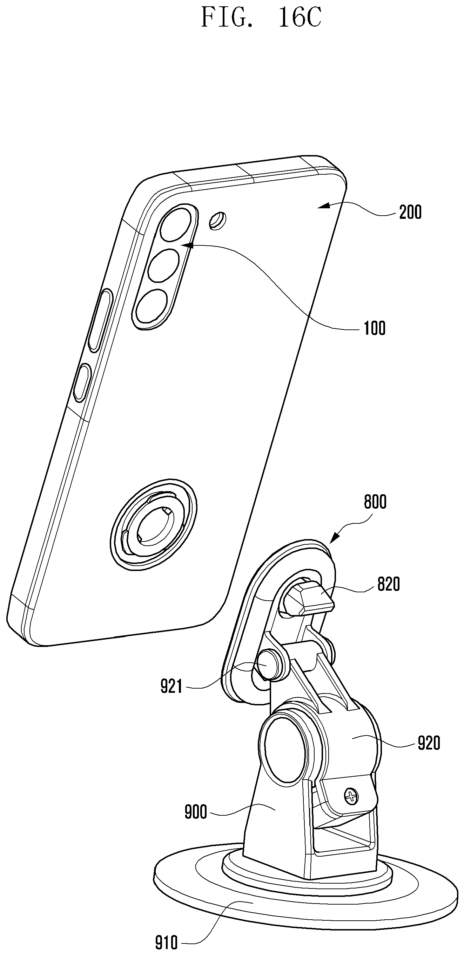

With reference to FIG. 16C, the mount module 800 is a holding structure and may include a stand member 900 including a holder member 920 rotatably coupled thereto through a rotation member 921 and a suction plate 910 to which the holder member is rotatably coupled and for holding inside a vehicle. In an embodiment, the mount module 800 may be fixed inside the vehicle through the stand member 900 and the suction plate 910, and be adjusted to various angles through the holder member 920, thereby providing convenience of use.

According to various embodiments, a holding accessory may include a protective cover (e.g., the protective cover 200 of FIG. 1A) detachably coupled to cover at least a portion of an electronic device (e.g., the electronic device 100 of FIG. 1A) and including a module mounting part (e.g., the module mounting part 210 of FIG. 2) including at least one protruding rib (e.g., the protruding rib 2121 of FIG. 2); and a mount module (e.g., the mount module 300 of FIG. 3) mounted on the module mounting part, wherein the mount module may include a holder mount (e.g., the holder mount 310 of FIG. 4) including a first surface (e.g., the first surface 3101 of FIG. 3) and a second surface (e.g., the second surface 3102 of FIG. 3) facing in a direction opposite to that of the first surface, and a holder part (e.g., the holder part 311 of FIG. 4) disposed at the first surface and having at least one guide groove (e.g., the guide groove 3123 of FIG. 4) so as to receive the at least one protruding rib; a cover (e.g., the cover 320 of FIG. 3) disposed at the second surface; a holding structure (e.g., the ring holder 330 of FIG. 3) movably disposed at the cover and/or the holder mount; and a rocker member (e.g., the rocker member 340 of FIG. 3) slidably disposed at least partially between the holder mount and the cover and configured to maintain a coupled state of the mount module, wherein the mount module may be coupled to the protective cover in a manner in which the at least one protruding rib is seated in the at least one guide groove in the case that the holder mount is mounted and then rotated at a designated angle.

According to various embodiments, the rocker member may include a hook piece (e.g., the hook piece 344 of FIG. 3) protruded to the module mounting part in a manner that penetrates the holder mount, and in the rocker member, the hook piece may be selectively hooked in a hook groove (e.g., the hook groove 212a of FIG. 5B) formed in the module mounting part through a sliding operation.

According to various embodiments, the rocker member may be moved at least partially through a manipulation of a button portion (e.g., the button portion 342 of FIG. 3) exposed through the cover.

According to various embodiments, the rocker member may include a rocker body (e.g., the rocker body 341 of FIG. 3) slidably disposed at the second surface; and an elastic structure (e.g., the elastic structure 343 of FIG. 3) extended from the rocker body, and a position of the rocker member may be maintained through an operation of the elastic structure hooked in a specific position of an elastic support piece (e.g., the elastic support piece 350 of FIG. 3) disposed at the second surface according to a movement thereof.

According to various embodiments, the elastic structure may include a first tension rib (e.g., the first tension rib 3431 of FIG. 8A) elastically extended from the rocker body and including a first recess (e.g., the first recess 3431a of FIG. 8A); and a second tension rib (e.g., the second tension rib 3432 of FIG. 8A) elastically extended from the rocker body and including a second recess (e.g., the second recess 3432a of FIG. 8A) and spaced apart from the first tension rib by a designated interval, and the elastic support piece may be positioned to contact between the first tension rib and the second tension rib.

According to various embodiments, the elastic support piece may include a first hook portion (e.g., the first hook portion 351 of FIG. 8A) and a second hook portion (e.g., the second hook portion 352 of FIG. 8A) spaced apart from the first hook portion, and in the rocker member, the first recess and the second recess may form a symmetrical pair in the first hook portion or the second hook portion and be selectively hooked to be changed to a locked state or an unlocked state.

The module mounting part may include a holder guide groove (e.g., the holder guide groove 211 of FIG. 2) and a ring-shaped protruding portion (e.g., the protruding portion 212 of FIG. 2) protruded from the holder guide groove, and the at least one protruding rib may include a plurality of protruding ribs (e.g., the protruding ribs 2121 of FIG. 2) protruded at a designated interval along an outer circumferential surface of the protruding portion.

According to various embodiments, the holder part may include a circular flange (e.g., the flange 312 of FIG. 4) disposed at the first surface; and a receiving groove (e.g., the receiving groove 3121 of FIG. 8A) formed through the flange and configured to receive the protruding portion, and the at least one guide groove may be formed through a plurality of holder ribs (e.g., the holder ribs 3122 of FIG. 8A) protruded from the flange in the direction of the receiving groove.

According to various embodiments, the guide groove may include a first stopper (e.g., the first stopper 3123a of FIG. 10) protruded in the direction of the receiving groove at one end and a second stopper (e.g., the second stopper 3123b of FIG. 10) protruded in the direction of the receiving groove at the other end, and a protruding amount of the first stopper may be greater than that of the second stopper.

According to various embodiments, a position of the protruding rib may be maintained between the first stopper and the second stopper after the mount module is temporarily coupled through rotation.

According to various embodiments, the holding accessory may include a ring holder (e.g., the ring holder 330 of FIG. 3) rotatably coupled to a hinge housing (e.g., the hinge housing 322 of FIG. 3) extended from the cover and having a circular cross-section.

According to various embodiments, the ring holder may include at least one flat cutting portion (e.g., the cutting portion 3312 of FIG. 5C) formed lower than an outer circumferential surface and selectively contact at a specific rotation angle with at least one filling portion (e.g., the filling portion 3222 of FIG. 5C) protruded further than an inner circumferential surface at the inner circumferential surface of the hinge housing.

According to various embodiments, the hinge housing may include a partially open opening portion (e.g., the opening portion 3221 of FIG. 5C), and a rotation position of the ring holder may be maintained at various free angle positions through a pressing force of the hinge housing through a rotation operation of the cutting portion deviating from the filling portion.

According to various embodiments, the holding accessory may include a slide cover (e.g., the slide cover 530 of FIG. 12A) movably disposed in an upper portion of the cover (e.g., the cover 520 of FIG. 12A), wherein the slide cover may be moved together with the rocker member (e.g., the rocker member 540 of FIG. 12A) with the cover therebetween.

According to various embodiments, the slide cover may include at least one friction-reducing protrusion (e.g., the friction-reducing protrusion 532 of FIG. 12B) protruded at a contact surface corresponding to the cover to induce frictional force reduction.

According to various embodiments, the rocker member may include at least one friction-reducing protrusion (the friction-reducing protrusion 545 of FIG. 12C) protruded at a contact surface corresponding to the cover to induce friction reduction.

According to various embodiments, the slide cover may maintain a locked state through the rocker member when substantially completely overlapping the cover when viewed from above.

According to various embodiments, the electronic device may include a protective cover 200 including a module mounting part 210 including at least one protruding rib 2121; and a protective cover (e.g., the protective cover 200 of FIG. 1A) including a module mounting part (e.g., the module mounting part 210 of FIG. 2) detachably coupled to cover at least a part of the electronic device (e.g., the electronic device 100 of FIG. 1A) and including at least one protruding rib (e.g., the protruding rib 2121 of FIG. 2); and a mount module (e.g., the mount module 300 of FIG. 3) mounted on the module mounting part, wherein the mount module may include a holder mount (e.g., the holder mount 310 of FIG. 4) including a first surface (e.g., the first surface 3101 of FIG. 3), a second surface (e.g., the second surface 3102 of FIG. 3) facing in a direction opposite to that of the first surface, and a holder part (e.g., the holder part 311 of FIG. 4) disposed at the first surface and having at least one guide groove (e.g., the guide groove 3123 of FIG. 4) so as to receive at least one protruding rib; and a cover (e.g., the cover 320 of FIG. 3) disposed at the second surface; a holding structure (e.g., the ring holder 330 of FIG. 3) movably disposed at the cover and/or the holder mount; and a rocker member (e.g., the rocker member 340 of FIG. 3) slidably disposed at least partially between the holder mount and the cover, and configured to maintain a coupled state of the mount module, wherein the mount module may be coupled to the protective cover in a manner in which the at least one protruding rib is seated in the at least one guide groove in the case that the holder mount is mounted and then rotated at a designated angle.

According to various embodiments, the rocker member may include a hook piece (e.g., the hook piece 344 of FIG. 3) protruded to the module mounting part in a manner that penetrates the holder mount, and in the rocker member, the hook piece may be selectively hooked in a hook groove (e.g., the hook groove 212a of FIG. 5B) formed in the module mounting part through a sliding operation.

According to various embodiments, the rocker member may include a rocker body (e.g., the rocker body 341 of FIG. 3) slidably disposed at the second surface; and an elastic structure (e.g., the elastic structure 343 of FIG. 3) extended from the rocker body, and a position of the rocker member may be maintained through an operation in which an elastic support piece (e.g., the elastic support piece 350 of FIG. 3) disposed at the second surface is hooked in the elastic structure according to a movement thereof.

Embodiments of the disclosure disclosed in this specification and drawings merely present specific examples to easily describe the technical content according to the embodiments of the disclosure and to help the understanding of the embodiments of the disclosure, and they do not intend to limit the scope of the embodiments of the disclosure. Accordingly, in addition to the embodiments disclosed herein, all changes or modifications derived from the technical ideas of various embodiments of the disclosure should be interpreted as being included in the scope of various embodiments of the disclosure.

## Claims

1. A holding accessory, comprising:
a protective cover 200 detachably coupled to cover at least a portion of an electronic device 100 and including a module mounting part 210 including at least one protruding rib 2121; and
a mount module 300 mounted on the module mounting part,
wherein the mount module comprises:
a holder mount 310 including a first surface 3101 and a second surface 3102 facing in an direction opposite to that of the first surface, and a holder part 311 disposed at the first surface and having at least one guide groove 3123 so as to receive at least one protruding rib;
a cover 320 disposed at the second surface;
a holding structure 330 movably disposed at the cover and/or the holder mount; and
a rocker member 340 slidably disposed at least partially between the holder mount and the cover and configured to maintain a coupled state of the mount module,
wherein the mount module is coupled to the protective cover in a manner in which the at least one protruding rib is seated in the at least one guide groove in the case that the holder mount is mounted and then rotated at a designated angle.

2. The holding accessory of claim 1, wherein the rocker member comprises a hook piece 344 protruded to the module mounting part in a manner that penetrates the holder mount, and
in the rocker member, the hook piece is selectively hooked in a hook groove 212a formed in the module mounting part through a sliding operation.

3. The holding accessory of claim 1 or 2, wherein the rocker member is moved at least partially through a manipulation of a button portion 342 exposed through the cover.

4. The holding accessory of any one of claims 1 to 3, wherein the rocker member comprises:
a rocker body 341 slidably disposed at the second surface; and
an elastic structure 343 extended from the rocker body,
wherein a position of the rocker member is maintained through an operation of the elastic structure hooked at a specific position of an elastic support piece 350 disposed at the second surface according to a movement thereof.

5. The holding accessory of claim 4, wherein the elastic structure comprises:
a first tension rib 3431 elastically extended from the rocker body and including a first recess 3431a; and
a second tension rib 3432 extended elastically from the rocker body and including a second recess 3432a and spaced apart from the first tension rib by a designated interval,
wherein the elastic support piece is positioned to contact between the first tension rib and the second tension rib.

6. The holding accessory of claim 5, wherein the elastic support piece comprises a first hook portion 351 and a second hook portion 352 spaced apart from the first hook portion, and
in the rocker member, the first recess and the second recess form a symmetrical pair in the first hook portion or the second hook portion, and are selectively hooked to be changed to a locked state or an unlocked state.

7. The holding accessory of claim 1, wherein the module mounting part comprises:
a holder guide groove 211; and
a ring-shaped protruding portion 212 protruded from the holder guide groove,
wherein the at least one protruding rib comprises a plurality of protruding ribs 2121 protruded at a designated interval along an outer circumferential surface of the protruding portion.

8. The holding accessory of claim 7, wherein the holder part comprises:
a circular flange 312 disposed at the first surface; and
a receiving groove 3121 formed through the flange 312 and configured to receive the protruding portion,
wherein the at least one guide groove is formed through a plurality of holder ribs 3122 protruded from the flange in a direction of the receiving groove.

9. The holding accessory of claim 8, wherein the guide groove comprises a first stopper 3123a protruded in the direction of the receiving groove at one end, and a second stopper 3123b protruded in the direction of the receiving groove at the other end, and
a protruding amount of the first stopper is greater than that of the second stopper.

10. The holding accessory of claim 9, wherein a position of the protruding rib is maintained between the first stopper and the second stopper after the mount module is temporarily coupled through rotation.

11. The holding accessory of claim 1, further comprising a ring holder 330 rotatably coupled to a hinge housing 322 extended from the cover and having a circular cross-section.

12. The holding accessory of claim 11, wherein the ring holder comprises at least one flat cutting portion 3312 formed lower than an outer circumferential surface, and is configured to selectively contact at a specific rotation angle with at least one filling portion 3222 protruded further than an inner circumferential surface at the inner circumferential surface of the hinge housing.

13. The holding accessory of claim 12, wherein the hinge housing comprises a partially open opening portion 3221, and
a rotation position of the ring holder is maintained at various free angle positions through a pressing force of the hinge housing through a rotation operation of the cutting portion deviating from the filling portion.

14. The holding accessory of claim 1, further comprising a slide cover 530 movably disposed in an upper part of the cover 520,
wherein the slide cover is moved together with the rocker member 540 with the cover therebetween.

15. An electronic device, comprising:
a protective cover 200 detachably coupled to cover at least a portion of an electronic device 100 and including a module mounting part 210 including at least one protruding rib 2121; and
a mount module 300 mounted on the module mounting part,
wherein the mount module comprises:
a holder mount 310 including a first surface 3101 and a second surface 3102 facing in an direction opposite to that of the first surface, and a holder part 311 disposed at the first surface and having at least one guide groove 3123 so as to receive at least one protruding rib;
a cover 320 disposed at the second surface;
a holding structure 330 movably disposed at the cover and/or the holder mount; and
a rocker member 340 slidably disposed at least partially between the holder mount and the cover, and configured to maintain a coupled state of the mount module,
wherein the mount module is coupled to the protective cover in a manner in which the at least one protruding rib is seated in the at least one guide groove in the case that the holder mount is mounted and then rotated at a designated angle.
